# EUROPÄISCHE PATENTANMELDUNG

(11) **EP 1 081 740 A1**
(43) Veröffentlichungstag der Anmeldung: **07.03.2001**
(21) Anmeldenummer: 00202272.1
(22) Anmeldetag: 29.06.2000
(51) Int. Cl.: H01J 35/10, F16C 39/02, F16C 39/06

(54) **Drehanoden-Röntgenröhre mit axialer Lagerung.**

(30) Priorität: 07.07.1999 DE 19931296
(71) Anmelder: Philips Corporate Intellectual Property GmbH, 52064 Aachen (DE); Koninklijke Philips Electronics N.V., 5621 BA Eindhoven (NL)
(72) Erfinder: Bathe, Christoph, 52064 Aachen (DE)
(74) Vertreter: Volmer, Georg, Dipl.-Ing.

(57) **Zusammenfassung**

Es wird eine Drehanoden-Röntgenröhre mit einer axialen Lagerung beschrieben, die insbesondere zur Kombination mit einem radialen Spiralrillenlager geeignet ist. Ein Problem der bekannten axialen Magnetlager, die im allgemeinen zwei in Radialrichtung gerichtete und einander gegenüberliegende Zahnstrukturen umfassen, besteht darin, daß in der Anlauf- und Endlaufphase nicht unerhebliche Radialkräfte erzeugt werden, die insbesondere radiale Spiralrillenlager stark verschleißen können. Durch Anordnung von mindestens zwei magnetischen Elementen (50, 55), die in Axialrichtung so beabstandet und befestigt sind, daß sie axiale Lagerkräfte aufnehmen, wird ein Axiallager mit wesentlich geringeren Radialkräften und somit geringerer Belastung der Radiallager geschaffen. Eine weitere Lösung des Problems wird mit einem Axiallager in Form eines Kugeleinpunktlagers geschaffen.

## Beschreibung

Die Erfindung betrifft eine Drehanoden-Röntgenröhre mit einer axialen Lagerung, die insbesondere zur Kombination mit radialen Spiralrillenlagern geeignet ist.

Eine Röntgenröhre dieser Art ist zum Beispiel aus der DE 30 17 291 bekannt und umfaßt eine innerhalb einer Vakuumröhre angeordnete, drehbar gelagerte Anode (Drehanode), die mit einem Motorläufer verbunden ist, der von außerhalb der Röhre durch einen Motorständer angetrieben wird. Die Anode ist radial mit zwei Spiralrillenlagern und axial mit zwei zahnartige Strukturen aus einem magnetisierbaren Metall (Eisen) gelagert, die an der Drehanode bzw. einem stationären Gehäuseteil festgelegt sind, wobei die axiale Kraftwirkung durch das Zusammenwirken der sich in Radialrichtung erstreckenden und gegenüberliegenden Zähne der beiden Strukturen erzeugt wird. Wenn die Zähne genau gegenüberliegend ausgerichtet sind, ist die axiale Kraftwirkung Null. Wenn sich die Zähne durch eine axiale Bewegung der Drehanode gegeneinander verschieben, führen die damit verbundenen magnetischen Streuverluste des magnetischen Kreises im Bereich der Zähne zu einer axialen Rückstellkraft. Die Magnetanordnung bildet somit ein selbstregelndes Axiallager mit stabilem Nullpunkt.

Diese Magnetanordnung hat jedoch den Nachteil, daß gleichzeitig auch Radialkräfte erzeugt werden, die nicht selbstregelnd sind und sich außerhalb der konzentrischen Mittenposition der Anode noch verstärken. Insbesondere beim Ein- und Ausschalten der Drehanode können diese Radialkräfte zu einer hohen Belastung und einem Verschleiß an den Radiallagern führen. Dies gilt besonders dann, wenn als Radiallager Spiralrillenlager verwendet werden, da diese bei niedriger Drehzahl noch keine nennenswerte Tragkraft aufweisen.

Der Erfindung liegt deshalb die wesentliche Aufgabe zugrunde, eine Drehanoden-Röntgenröhre mit einer axialen Lagerung zu schaffen, bei der die Radialkräfte des Axiallagers wesentlich geringer sind und die insbesondere zur Kombination mit radialen Spiralrillenlagern geeignet ist.

Eine erste Lösung dieser Aufgabe erfolgt gemäß Anspruch 1 mit einer Drehanoden-Röntgenröhre der eingangs genannten Art, die sich dadurch auszeichnet, daß die axiale Lagerung eine Magnetanordnung mit mindestens zwei eine magnetische Kraft aufeinander ausübenden Elementen aufweist, die in Axialrichtung der Drehanode so beabstandet und befestigt sind, daß die magnetische Kraft in zumindest einer Richtung axiale Lagerkräfte aufnimmt.

Durch die in Axialrichtung der Drehanode beabstandet angeordneten Elemente sind die eingangs erwähnten Radialkräfte nahezu Null, so daß die Belastung der Radiallager wesentlich geringer ist.

Ein Vorteil dieser Lösung besteht darin, daß die erfindungsgemäße Magnetanordnung wesentlich einfacher aufgebaut und somit kostengünstiger ist, als die eingangs erläuterten zahnartigen Magnetstrukturen. Weiterhin wird gegenüber diesen Magnetstrukturen erhebliches Gewicht eingespart, so daß die Belastung der Radiallager und deren Verschleiß, insbesondere in der Anlauf- und Endlaufphase, entsprechend geringer ist. Schließlich kann der Durchmesser eines Drehanoden-Lagerelementes bzw. einer Lagerhülse wesentlich größer sein, so daß die Möglichkeit geschaffen wird, dort eine oder mehrere Bohrungen einzubringen, um die Anode mittels einer Kühlflüssigkeit zu kühlen.

Eine zweite Lösung der genannten Aufgabe erfolgt gemäß Anspruch 7 mit einer Drehanoden-Röntgenröhre der eingangs genannten Art, die sich dadurch auszeichnet, daß die axiale Lagerung ein Stirnflächen-Kugeleinpunktlager mit einer in einem Kegel liegenden Kugel aufweist, die an einer als Widerlager dienenden Platte anliegt.

Die Unteransprüche haben vorteilhafte Weiterbildungen der Erfindung zum Inhalt.

Die Ausführung gemäß Anspruch 3 hat den Vorteil, daß in beiden Axialrichtungen wirkende Kräfte aufgenommen werden, so daß die Drehanode eine stabile und kräftefreie Mittenstellung in axialer Richtung einnehmen kann.
Eine besonders vorteilhafte axiale Lagerung ergibt sich gemäß Anspruch 10 durch Kombination eines axialen Magnetlagers mit einem axialen Stirnflächen-Kugeleinpunktlager.

Weitere Einzelheiten, Merkmale und Vorteile der Erfindung ergeben sich aus der folgenden Beschreibung von bevorzugten Ausführungsformen anhand der Zeichnung.

Es zeigt:
Fig. 1 einen Längsschnitt durch eine erste Ausführungsform der Erfindung;
Fig. 2 eine Draufsicht auf eine axiale Lagerung;
Fig. 3 einen Längsschnitt durch eine zweite Ausführungsform der Erfindung;
Fig. 4 einen Längsschnitt durch eine dritte Ausführungsform der Erfindung;
Fig. 5 eine Detaildarstellung eines Ausschnitts aus Figur 4; und
Fig. 6 einen Längsschnitt durch eine alternative Anordnung der Röhrenelemente.

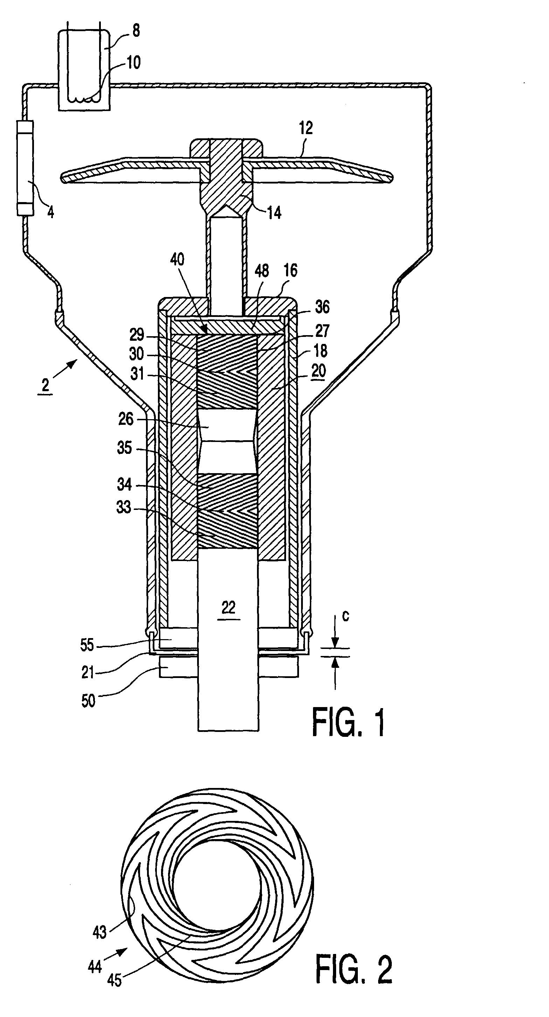

Eine Drehanoden-Röntgenröhre umfaßt gemäß Figur 1 eine Röhre 2 mit einem Strahlungs-Austrittsfenster 4 und einer Kathodenanordnung 8 mit Heizdraht 10. Diesem gegenüber liegt eine Anodenscheibe 12, die an einer Anodenwelle 14 montiert ist. An der Anodenwelle 14 ist ferner mit einem Montagering 16 ein zylindrischer Rotor 18 und eine Endplatte 48 mit Lagerhülse 20 befestigt.

Ein zylindrisches Lagerelement 22, das in die Lagerhülse 20 in axialer und radialer Richtung eingepaßt ist, weist an seiner Oberfläche 27 ein erstes Spiralrillenlager mit einem ersten, fischgrätartigen Muster 30 aus schraubenförmig angeordneten Nuten in Form von zwei Nutenmustern 29 und 31 auf, die in entgegengesetzten Richtungen verlaufen. Weiterhin befindet sich auf dem zylindrischen Lagerelement 22 ein Zwischenbereich 26 ohne Nuten, sowie ein zweites fischgrätartiges Muster 34 aus schraubenförmig verlaufenden Nuten, das durch zwei Nutenmuster 33 und 35 gebildet ist, die ebenfalls entgegengesetzt gerichtet sind. Diese beiden ersten Spiralrillenlager 30, 34 dienen als radiale Lagerung für die Drehanode.

An der in der Darstellung oberen Stirnfläche 36 des Lagerelementes 22 befindet sich eine erste axiale Lagerung in Form eines zweiten Spiralrillenlagers 40 mit gemäß Figur 2 spiralförmig verlaufenden Nuten 43, 45. Diese bilden jeweils ein erstes bzw. ein zweites Nutenmuster, die in ähnlicher Weise wie bei dem ersten Spiralrillenlager entgegengesetzt zueinander verlaufend gerichtet sind, so daß ein fischgrätartiges Muster 44 entsteht.

Eine zweite axiale Lagerung ist durch eine an dem in der Darstellung unteren Ende der Röhre 2 angebrachte Magnetanordnung gebildet. Diese Lagerung umfaßt zwei zu der Drehanodenachse koaxial angeordnete Elemente, nämlich zum einen einen ersten, an dem Lagerelement 22 in Axialrichtung festgelegten ringförmigen Magneten 50, der als Widerlager dient und unterhalb des Bodens 21 der Röhre 2 angeordnet ist. Diesem gegenüber liegt zum anderen innerhalb der Röhre und unmittelbar über dem Boden 21 ein ringförmiges Element 55 aus Eisen oder einem anderen magnetisierbaren Material, das an dem zylindrischen Rotor 18 und somit in Axialrichtung an der Drehanode festgelegt ist. Zwischen dem Magnet 50 und dem Eisenelement 55 befindet sich ein Luftspalt c, über den der Magnet eine anziehende Kraft auf das Eisenelement ausübt. Dadurch wird eine entgegengesetzt gerichtete axiale Lagerkraft aufgenommen und die erste axiale Lagerung (oberes Stirnflächen-Spiralrillenlager) mit einer Vorspannung beaufschlagt. Anstelle des Eisenelementes 55 könnte natürlich auch ein zweiter ringförmiger Magnet eingesetzt werden.

Die Anordnung des ersten Magneten 50 außerhalb der Röhre hat insbesondere in dem Fall, in dem es sich dabei um einen Permanentmagneten handelt, der im allgemeinen temperaturempfindlich ist, den Vorteil, daß dieser nach Fertigstellung der Röhre und den damit verbundenen Heizprozessen montiert werden kann. Anstelle eines Permanentmagneten kann auch ein Elektromagnet verwendet werden.

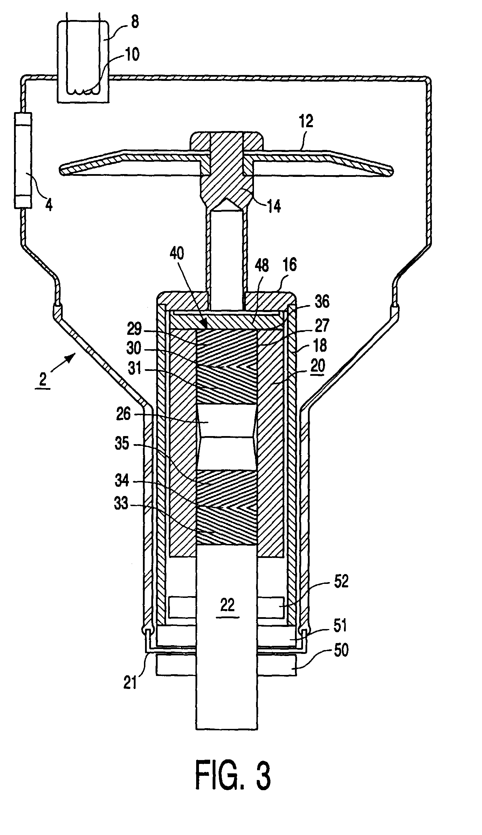

Figur 3 zeigt eine zweite Ausführungsform der Erfindung, bei der die erste axiale Lagerung (oberes Stirnflächen-Spiralrillenlager) die gleiche ist wie bei der ersten Ausführungsform.

Die zweite axiale Lagerung wird durch eine Magnetanordnung mit drei ringförmigen Magneten 50, 51, 52 gebildet. Der erste Magnet 50 ist wiederum an dem Lagerelement 22 befestigt, während der zweite Magnet 51 an dem zylindrischen Rotor 18 und der dritte Magnet 52 an dem Lagerelement 22 montiert ist. Die Magnete sind so angeordnet. daß jeweils gleichnamige Pole einander gegenüberliegen. Dies hat zur Folge, daß die Magnetanordnung Axiallagerkräfte in beiden Richtungen aufnehmen kann, so daß die Drehanode eine stabile axiale Mittenstellung einnimmt.

Zur Vereinfachung der Montage können die ringförmigen Elemente 50, 55; 51, 52 jeweils aus zwei Halbringen oder aus einer Mehrzahl von ringförmig angeordneten Einzelelementen zusammengesetzt sein.

Bei der zweiten Ausführungsform befindet sich zumindest der zweite Magnet 51 innerhalb der Röhre 2 und somit innerhalb des Vakuums. Dieser Magnet ist also sämtlichen Heizprozessen, der die Röhre während des Röhreneinfahrprozesses unterworfen wird, ausgesetzt. Bei temperaturempfindlichen Permanentmagneten besteht somit die Gefahr einer Entmagnetisierung.

Diesem Problem kann man auf zwei Arten begegnen. Einerseits sind Seltenerd-Magnete bekannt, die Temperaturen bis etwa 350°C standhalten können, ohne entmagnetisiert zu werden. Andererseits kann ein magnetisches Material, das durch zu hohe Temperaturen seine magnetische Kraft verloren hat, durch einen Magnetisierungsvorgang von außerhalb der Röhre wieder aufmagnetisiert werden.

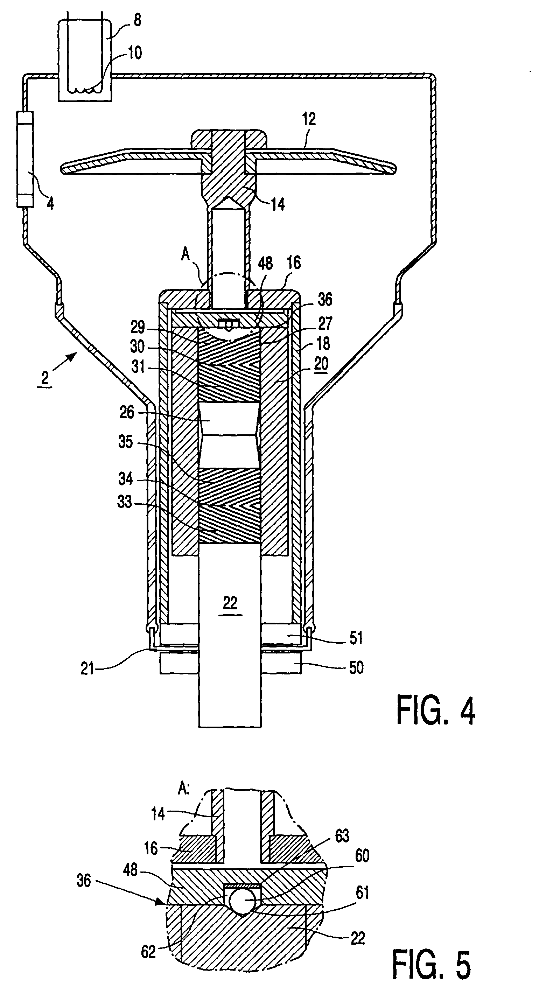

Figur 4 zeigt eine dritte Ausführungsform der Erfindung, die in erster Linie die erste (obere) axiale Lagerung betrifft und hier mit der zweiten axialen Lagerung in Form des ersten Magneten 50 und des Eisenelementes 55 (gemäß der ersten Ausführungsform) kombiniert ist. Die zweite axiale Lagerung könnte alternativ dazu auch gemäß der zweiten Ausführungsform ausgebildet sein.

Bei dieser dritten Ausführungsform gemäß Figur 4 ist als erste axiale Lagerung ein Stirnflachen-Kugeleinpunktlager gemäß der Detaildarstellung in Figur 5 vorgesehen. Dieses umfaßt eine Kugel 60, die in einem Kegel 61 in der Stirnfläche 36 des Lagerelementes 22 ruht. In der gegenüberliegenden Endplatte 48 befindet sich eine Ausnehmung 62, die an ihrem Boden eine Platte 63 aufweist, die als Widerlager für die Kugel 60 dient. Der Durchmesser der Kugel 60 sowie die Tiefe der Ausnehmung 62 und die Form des Kegels 61 sind so aufeinander abgestimmt, daß zwischen der Stirnfläche 36 des Lagerelementes 22 und der Endplatte 48 ein eine Reibung verhindernder Spalt bestehen bleibt.

Die Wirkungsweise dieses Axiallagers beruht darauf, daß durch die Zentrierung der Kugel 60 in dem Kegel 61 und die damit verbundene ringförmige Auflagefläche der Kugel diese in dem Kegel nicht rotieren kann. Die axiale Lagerung der Drehanode erfolgt hierbei über den Berührungspunkt zwischen der Kugel 60 und der Platte 63, so daß diese Lagerung besonders geräusch- und reibungsarm ist.

Die Kombination mit einer axialen Magnetlagerung bietet auch hier den Vorteil, daß eine æm-genaue axiale Justierung des Rotors 18, die im Falle eines axialen Spiralrillenlagers anstelle des Magnetlagers erforderlich ist, nicht unbedingt vorgenommen werden muß.

Zur Verlängerung der Lebensdauer werden die Kugel 60 und die Platte 63 aus verschleissfesten Materialkombinationen herstellt. Hierzu können zum Beispiel jeweils Wolframcarbid (WC), Siliziumcarbid (SiC), Siliziumnitrid (Si3N4) oder Bornitrid (BN) dienen, oder Kugel und Platte können mit einer Beschichtung zum Beispiel aus Titancarbid (TiC) oder Titannitrid (TiN) versehen werden.

Eine weitere Verschleißminderung kann dadurch erreicht werden, daß in den Spalt zwischen dem Lagerelement 22 und der Endplatte 48 als Schmiermittel zum Beispiel das Material eingebracht wird, das für das axiale erste Spiralrillenlager verwendet wird, wie zum Beispiel Flüssigmetall.

Als Radiallager kann bei allen Ausführungsformen das im Zusammenhang mit Figur 1 beschriebene erste Spiralrillenlager 30, 34 dienen.

Die drei obigen Ausführungsformen der axialen Lagerung wurden für den Fall beschrieben, bei dem die Anodenwelle 14 über den Montagering 16 mit dem zylindrischen Rotor 18, der Endplatte 48 und der Lagerhülse 20 befestigt ist, so daß alle diese Teile rotieren, während das Lagerelement 22 fest steht. Alternativ dazu ist es gemäß Figur 6 auch möglich, daß die Anodenscheibe 12 und die Anodenwelle 14, an der mittels des Montagerings 16 der zylindrische Rotor 18 montiert ist, direkt mit dem Lagerelement 22 verbunden ist, während die Lagerhülse 20 stationär an dem Boden der Röhre 2 ruht. In diesem Fall dreht sich also die Anodenwelle 14 zusammen mit dem Lagerelement 22 in der Lagerhülse 20.

Das Lagerelement 22 ist in diesem Fall mit seiner in der Darstellung unteren (freien) Stirnfläche an der Lagerhülse 20 axial gelagert. Dieses axiale Lager stellt die erste axiale Lagerung (Stirnflächen-Spiralrillenlager gemäß Figur 2 oder Stirnflächen-Kugeleinpunktlager gemäß der Detaildarstellung in Figur 5) dar, während die zweite axiale Lagerung durch die Magnetanordnung 50, 55 gemäß Figur 1 oder die Magnetanordnung 50, 51, 52 gemäß Figur 3 gebildet sein kann.

## Patentansprüche

1. Drehanoden-Röntgenröhre mit einer axialen Lagerung,
dadurch gekennzeichnet,
dass die axiale Lagerung eine Magnetanordnung mit mindestens zwei eine magnetische Kraft aufeinander ausübenden Elementen (50, 55) aufweist, die in Axialrichtung der Drehanode so beabstandet und befestigt sind, daß die magnetische Kraft in zumindest einer Richtung axiale Lagerkräfte aufnimmt.

2. Drehanoden-Röntgenröhre nach Anspruch 1,
dadurch gekennzeichnet,
dass das erste Element ein Magnetring (50) und das zweite Element ein Ring (55) aus einem magnetisierbaren Metall ist, wobei die Elemente koaxial um die Derahanodenachse angeordnet sind und eines der Elemente (50; 55) als Widerlager fixiert und das andere Element (55; 50) in Axialrichtung an der Drehanode (12) festgelegt ist.

3. Drehanoden-Röntgenröhre nach Anspruch 1,
dadurch gekennzeichnet,
dass die Magnetanordnung durch drei Elemente in Form eines ersten bis dritten Magneten (50, 51, 52) gebildet ist, die so ausgerichtet sind, daß jeweils gleichnamige Pole der Magnete einander gegenüberliegen, wobei der erste und dritte Magnet (50, 52) als Widerlager fixiert und der zweite Magnet (51) in Axialrichtung an der Drehanode (12, 18) festgelegt ist.

4. Drehanoden-Röntgenröhre nach Anspruch 1,
dadurch gekennzeichnet,
dass mindestens eines der Elemente (50, 51, 52) ein Elektromagnet ist.

5. Drehanoden-Röntgenröhre nach Anspruch 1
dadurch gekennzeichnet,
dass die axiale Lagerung ein Stirnflächen-Spiralrillenlager (40) umfaßt.

6. Drehanoden-Röntgenröhre nach Anspruch 1,
gekennzeichnet durch ein radiales Spiralrillenlager (30, 34).

7. Drehanoden-Röntgenröhre mit einer axialen Lagerung,
dadurch gekennzeichnet,
dass die axiale Lagerung ein Stirnflächen-Kugeleinpunktlager mit einer in einem Kegel (61) liegenden Kugel (60) aufweist, die an einer als Widerlager dienenden Platte (63) anliegt.

8. Drehanoden-Röntgenröhre nach Anspruch 7,
dadurch gekennzeichnet,
dass die Kugel (60) und/oder die Platte (63) aus Wolframcarbid (WC), Siliziumcarbid (SiC), Siliziumnitrid (Si3N4) oder Bornitrid (BN) gefertigt ist.

9. Drehanoden-Röntgenröhre nach Anspruch 7,
dadurch gekennzeichnet,
dass die Kugel (60) und / oder die Platte (63) mit einer Beschichtung aus Titancarbid (TiC) oder Titannitrid (TiN) versehen ist.

10. Drehanoden-Röntgenröhre nach Anspruch 7
dadurch gekennzeichnet,
dass die axiale Lagerung eine Magnetanordnung nach einem der Ansprüche 1 bis 4 aufweist.

11. Drehanoden-Röntgenröhre nach Anspruch 7
dadurch gekennzeichnet,
dass die axiale Lagerung ein Stirnflächen-Spiralrillenlager (40) umfaßt.

12. Drehanoden-Röntgenröhre nach Anspruch 7,
gekennzeichnet durch ein radiales Spiralrillenlager (30, 34).
